# EUROPEAN PATENT SPECIFICATION

(11) **EP 2 412 453 B1**
(45) Date of publication and mention of the grant of the patent: **25.01.2017**
(21) Application number: 10755987.4
(22) Date of filing: 15.03.2010
(51) Int. Cl.: B07C 1/00, B07C 3/18, G06T 7/00, G06K 9/32

(54) **ARTICLE SORTING MACHINE, ARTICLE SORTING METHOD, AND COMPUTER PROGRAM PRODUCT**
ARTIKELSORTIERVORRICHTUNG, ARTIKELSORTIERSVERFAHREN, UND KOMPUTERPROGRAMMPRODUKT
DISPOSITIF DE TRI D'ARTICLE, PROCÉDÉ DE TRI D'ARTICLE, ET PRODUIT PROGRAMME POUR ORDINATEUR

(30) Priority: 27.03.2009 JP 2009080518
(43) Date of publication of application: 01.02.2012
(73) Proprietor: NEC Corporation, Tokyo 108-8001 (JP)
(72) Inventor: SAKAKIHARA, Akihito, Tokyo 108-8001 (JP); KONDOH, Katsuhiko, Tokyo 108-8001 (JP)
(74) Representative: Vossius & Partner Patentanwälte Rechtsanwälte mbB
(86) International application number: PCT/JP2010/054756
(87) International publication number: WO 2010/110190

(56) References cited:
- DE-A1-102007 038 186
- JP-A- 9 057 207
- JP-A- H1 153 541
- JP-A- 2009 011 874
- US-A- 5 311 999
- US-A1- 2005 123 170
- US-B1- 6 888 084

## Description

The invention is related to an article sorting machine, an article sorting method, and a computer program product.

A delivered article (goods) like a mail is initially delivered (primary supply is carried out). However, the article which cannot be delivered is delivered again later (resupply is carried out).

In a process related to the primary supply (primary supply process), for example, an operator reads information of the article (e.g. destination address) through visual observation. Otherwise, an OCR (Optical Character Reader) device reads the information of the article by OCR. The read information is stored in a computer. An identifier (ID bar-code, or the like) representing the read information is printed on the article.

In a process related to the resupply (resupply process), information on the identifier of the article is read and the destination address of the article is identified based on the read information. The information which is read in the primary supply process is available, when the resupply process is carried out. Therefore, an operator or an OCR device is not required to read the information on the article again through visual observation or by using an OCR function.

In the method above described, a cost for maintenance of a printer for printing, ink, and the like is required in order to print the identifier on the article. Accordingly, there is the problem that running cost becomes much higher.

A method of using an image data is available in order to avoid the problem. That is, an article management device acquires the image data of the article in the primary supply process. The article management device associates an identification code with the image data. In the resupply process, the article management device acquires the image data of the article again and compares the image data with the image data acquired in the primary supply process. In the resupply process, an operator can identify the destination of the article without using printing based on the comparison result.

A related technology is disclosed in Published Japanese translation of a PCT application No. 2006-509271. This document describes that a digital image of a mail surface is associated with an identifier and the digital image is stored in a memory.

Another related technology is disclosed in Published Japanese translation of a PCT application No. 2003-510183. This document describes an article sorting method. The method is proposed to eliminate the need for printing a machine-readable identification code on each article.

Further related technology is disclosed in JP-H10(1998)-99790A. A paper sheet sorting device of the document includes a reader and a scanning unit. The reader reads sort information from a supplied mail. The scanning unit reads image information on a first face of the mail on which address information is recorded. The paper sheet sorting device sorts the mail based on the read information. When the read sort information and the image information cannot be recognized, the paper sheet sorting device prints an ID code on the mail and enters recognizable sort information into the mail. The paper sheet sorting device sorts the mail based on the printed ID cord and the entered sort information.

Technologies for comparing images are disclosed in JP-H2(1990)-79184 A, JP-H11(1999)-53541 A, JP-2002-334332 A, etc.

DE 10 2007 038 186 A discloses a method and an apparatus for transporting mass shipments of similar objects and sorting the objects according to their destination.

However, with respect to the same article, the image data acquired by the primary supply process does not necessarily match the image data acquired by the resupply process perfectly. For example, when the article tilts, the image of the article is elongated due to conditions of article transportation, or dirt is attached to the article, the image data acquired by the primary supply process does not match the image data acquired by the resupply process. In the case above described, it is very difficult to identify the mail by the image recognition technology in the resupply process.

PCT 2006-509172 A, PCT 2003-510183 A, and JP-H10(1998)-99790 A describe to read an image of a delivered article.

JP-H10(1998)-99790 A describes that when the read sort information and the image information cannot be recognized, the ID code is printed on the mail. The documents above, however, do not consider that the image data acquired by the resupply process may differ from the image data acquired by the primary supply process.

A object of the present invention is mainly to provide an article sorting machine, an article sorting method, and a computer program product which can improve
identification ratio of an article in a resupply process. This object is achieved with the features of the claims.

The invention is further described with reference to the drawings:
FIG. 1 is a schematic view illustrating an article sorting machine of the exemplary embodiment.
FIG. 2 is a schematic view illustrating an article sorting system of a first exemplary embodiment.
FIG. 3 is a block diagram illustrating a configuration of a mail sorting machine.
FIG. 4 is a flowchart illustrating operations of the mail sorting machine in a primary supply process.
FIG. 5 is a flowchart illustrating operations of the mail sorting machine in a supply process.
FIG. 6 is a schematic block diagram illustrating the mail sorting machine of a third exemplary embodiment.
FIG. 7 is a block diagram illustrating the mail sorting machine of a fourth exemplary embodiment.
FIG. 8 is an explanatory diagram illustrating an example of a method of generating a variation image data.
FIG. 9 is a conceptual diagram illustrating a process for extracting an image feature data.
FIG. 10 is a conceptual diagram illustrating a process for comparing the image feature data.

### < A first exemplary embodiment >

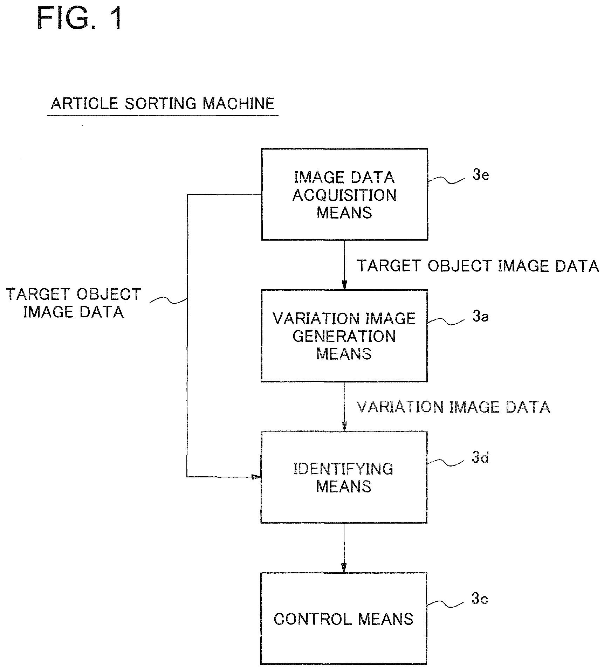

Referring to a drawing, a first exemplary embodiment of the present invention is described below. FIG. 1 is a schematic view illustrating an article sorting machine of the first exemplary embodiment. The article sorting machine includes an image data acquisition means 3e, a variation image generation means 3a, an identifying means 3d, and a control means 3c. The image data acquisition means 3e acquires an image of a target object as a target object image data. The variation image generation means 3a generates a variation image data similar to the target object image data. The identifying means 3d compares the target object image data with the variation image data and determines whether or not the target object can be identified by image recognition. The control means 3c carries out a process of identifying the target object based on the determination result by the identifying means 3d.

The article sorting machine of the first exemplary embodiment has an advantage that identification ratio of the article in the resupply process can be improved, due to the above configuration.

### < A second exemplary embodiment >

Details of the article sorting machine in a second exemplary embodiment are described below. In the second exemplary embodiment, the target object of the first exemplary embodiment is a mail, and the article sorting machine thereof is a mail sorting machine.

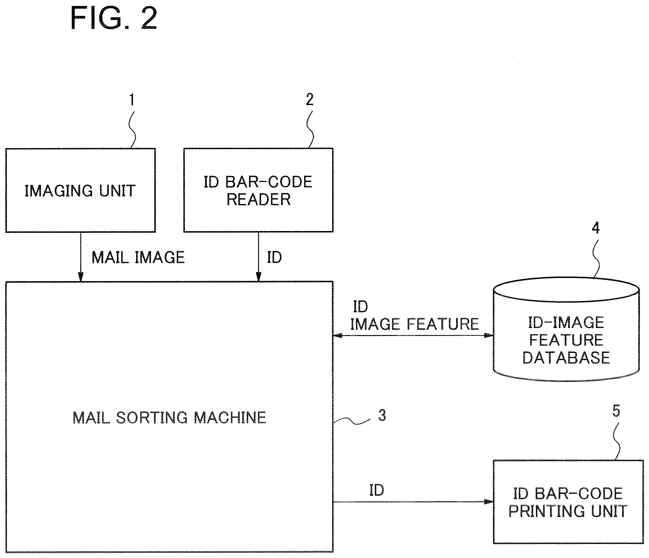

FIG. 2 is a schematic view illustrating a article sorting system of the second exemplary embodiment. The article sorting system includes an imaging unit 1, ID (Identity Document) bar-code reader 2, a mail sorting machine 3 (article sorting machine), an ID-image feature database 4 and an ID bar-code printing unit 5 (printing mechanism). The ID bar-code reader 2 reads an ID bar-code written on the mail. The ID bar-code printing unit 5 prints the ID bar-code on the mail.

The imaging unit 1 images the mail which is supplied to the article sorting system and generates a gray image data. The gray image data is a data of an image having, for example, 256 gradations and 200 resolutions (dpi). The imaging unit 1 may be a scanner or the like. The imaging unit 1 sends the generated image to the mail sorting machine 3 as a mail image data.

The mail sorting machine 3, for example, is configured by a computer in which a mail sorting program is installed.

The mail sorting machine 3 extracts a image feature data from the mail image data acquired from the imaging unit 1, as a primary supply process. The image feature data is a data which is used in a process of identifying the mail. In this second exemplary embodiment, the image feature data is a data representing a position and a size of a block area. The position and the size of the block area are acquired based on a binarized image (details are described below). The binarized image is an image which is formed by binarizing the image data using a predetermined threshold value.

The mail sorting machine 3 attaches ID information to the extracted image feature data, and stores it in the ID-image feature database 4. The ID information is information used in a process of identifying the mail, for example, a serial number which the control unit 3c issues as identification information.

The mail sorting machine 3 acquires a mail image data (resupply image data) from the imaging unit 1 as the resupply process. The mail sorting machine 3 extracts the image feature data from the resupply image data like the primary supply process. The mail sorting machine 3 identifies the extracted image data by referring to the ID-image feature database 4.

The mail sorting machine 3 includes a function determining (predicting) whether or not a mail can be identified if the mail after the primary supply process is resupplied. Determining the mail cannot be identified, the mail sorting machine 3 prints the ID bar-code on the unidentified mail by using the ID bar-code printing unit 5. When the mail is resupplied, the ID bar-code reader 2 acquires the ID information on the mail by reading the ID bar-code from the mail thereby. The mail sorting machine 3 identifies the mail based on the ID information acquired from the ID bar-code reader 2 as the resupply process.

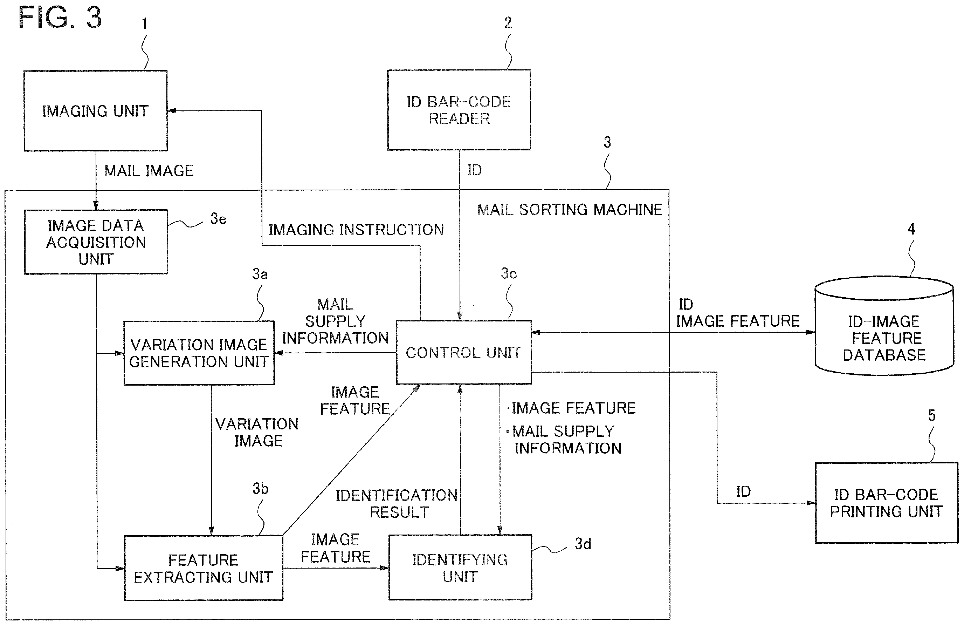

The mail sorting machine 3 is described below in detail. FIG. 3 is a block diagram illustrating a configuration of the mail sorting machine 3. The mail sorting machine 3 includes an image data acquisition unit 3e, a variation image generation unit 3a, a feature extracting unit 3b, a control unit 3c, and an identifying unit 3d.

### (Operations in the primary supply process)

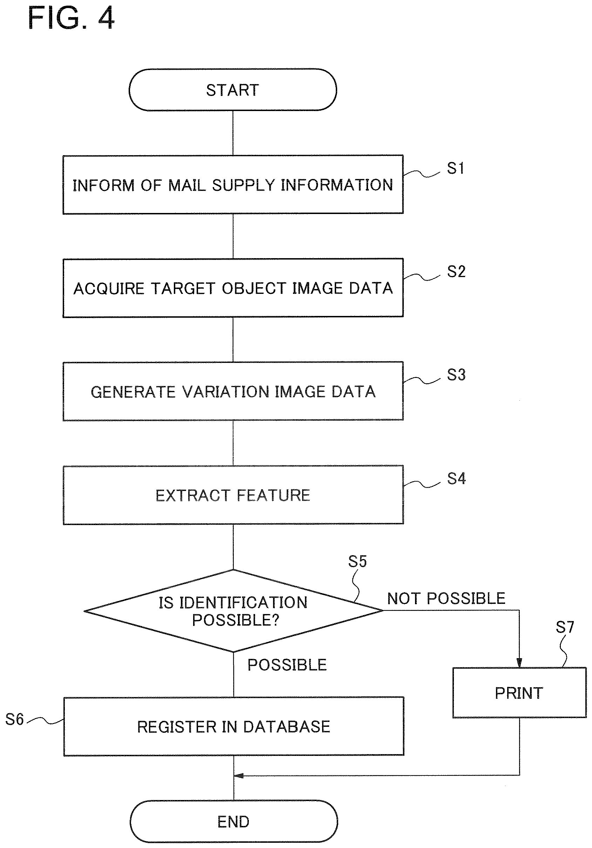

Operations of the mail sorting machine 3 in the primary supply process are initially described. FIG. 4 is a flowchart illustrating the operations of the mail sorting machine 3 in the primary supply process.

When the operations of the mail sorting machine system starts, the control unit 3c acquires mail supply information. The mail supply information is information representing the primary process or the resupply process, whichever is carried out. The mail supply information is, for example, entered through a touch panel or the like, which is not shown, by an operator when the mail is processed. Otherwise, the mail supply information is, for example, acquired (read out) from a bar-code attached on a tray carrying the mail. The control unit 3c informs the variation image generation unit 3a and the identifying unit 3d of the mail supply information representing the primary supply process (step S1). The control unit 3c issues the ID information (identification information) corresponding to the mail to be processed.

In the primary supply process, the imaging unit 1 images the mail and generates the mail image data (target object image data) corresponding to the mail. The image data acquisition unit 3e in the mail sorting machine 3 acquires the mail image data (target object image data) (step S2). The image data acquisition unit 3e sends the mail image data to the variation image generation unit 3a and the feature extracting unit 3b.

The variation image generation unit 3a predicts an image of the mail acquired in the resupply process. The variation image generation unit 3a generates the mail image data which is predicted to be acquired by the resupply process as the variation image data based on the mail image data acquired in the primary supply process. Specifically, the variation image generation unit 3a acquires change which may occur on the mail before the resupply process is conducted, through simulation. The variation image generation unit 3a generates the variation image data by reflecting the data of the acquired change in the acquired mail image data (step S3). The variation image data is sent to the feature extracting unit 3b.

The feature extracting unit 3b extracts an image feature for an identification process from the mail image data and generates a mail image feature data based on the extracted information. The feature extracting unit 3b extracts an image feature from the variation image data and generates a variation image feature data (step S4). The image feature is a feature acquired by binarizing by using the predetermined threshold value (details are described below). The feature extracting unit 3b sends the mail image feature data and the variation image feature data to the control unit 3c and the identifying unit 3d.

The identifying unit 3d tries the identification process in which the variation image feature data is compared with the mail image feature data. The identifying unit 3d determines whether or not it can be determined that the image feature represented in the variation image feature data is the same as the image feature represented in the mail image feature data (whether or not identification is possible through image recognition) (step S5). A determination process is carried out based on a size of an area where the mail image feature data overlaps the variation image feature data (details thereof is described below). The identifying unit 3d sends the determination result to the control unit 3c.

The control unit 3c attaches the ID information to the mail image feature data which the identifying unit 3d determines that it is possible to identify, and registers it in the ID-image feature database 4 (step S6).

The control unit 3c sends the ID information to the ID bar-code printing unit 5. The sent ID information is the ID information of the mail corresponding to the mail image feature data which the identifying unit 3d determines that it is not possible to identify. The ID bar-code printing unit 5 prints the ID bar-code on the mail (step S7).

### (Operations in the resupply process)

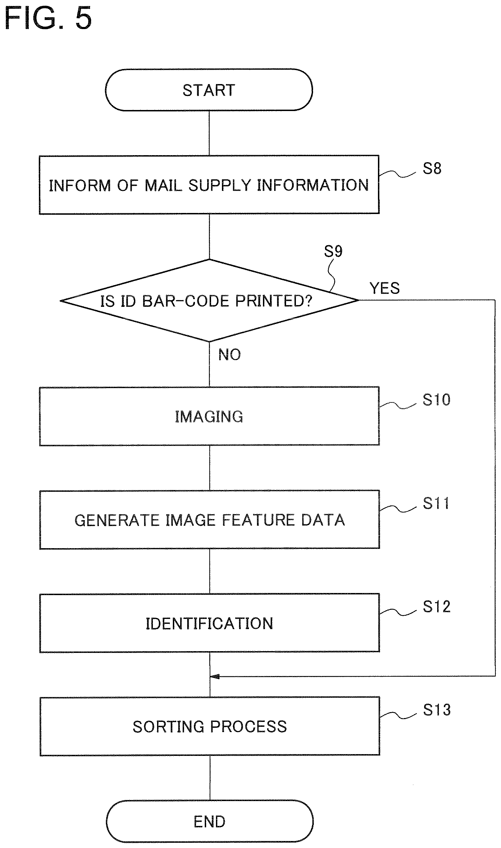

Next, Operations in the resupply process are described. FIG. 5 is a flowchart illustrating operations of the mail sorting machine 3 in the resupply process. The control unit 3c acquires the mail supply information. The mail supply information is information representing the prior supply process or the resupply process, whichever is carried out. The mail supply information is, for example, entered through a touch panel or the like (not shown) by an operator when the mail is supplied, like the primary supply process. Otherwise, the mail supply information is, for example, acquired (read out) from a bar-code attached on a tray carrying the mail. The control unit 3c informs each unit of the mail supply information representing the resupply process (step S8).

In the resupply process, the ID bar-code reader 2 determines whether or not the ID bar-code is printed on the mail (step S9). If the ID bar-code is printed, the ID bar-code reader 2 reads out the ID bar-code from the mail and acquires the ID information. The mail sorting machine 3 carries out a usual mail sorting process based on the ID information (step S13). The usual mail sorting process includes a process in which the ID information is associated with a destination code corresponding to the mail address, and which is commonly performed. Therefore, descriptions on the usual mail sorting process are omitted.

If the ID bar-code reader 2 determines that the ID bar-code is not printed on the mail, the control unit 3c instructs the imaging unit 1 to image the mail. The imaging unit 1 images the mail and generates a mail secondary image data (target object secondary image data) in response to the instruction (step S10). The imaging unit 1 supplies the mail secondary image data to the image data acquisition unit 3e. The image data acquisition unit 3e sends the mail secondary image data to the feature extracting unit 3b.

The feature extracting unit 3b extracts an image feature for the identification process from the acquired mail secondary image data and generates an image feature data (step S 11). The image feature data is a data representing a position and a size of a block area acquired based on the binarized image (image in which an image data is binarized by using a predetermined threshold value) (details are described below). The feature extracting unit 3b sends the image feature data to the identifying unit 3d.

The identifying unit 3d refers to the ID-image feature database 4 via the control unit 3c. The identifying unit 3d reads the ID information attached to the image feature data which is regarded to be equal to or almost equal to the acquired image feature data (identify image feature data) (step S12). The identifying unit 3d sends the identification result (i.e. ID information) to the control unit 3c.

The control unit 3c carries out the mail sorting process based on the acquired identification result (ID information) concerning the mail of which the resupply process is carried out (step S 13).

As described above, in the second exemplary embodiment, the variation image generation unit 3a generates the image data (variation image data) predicted to be acquired by the resupply process through the simulation. The identifying unit 3d, therefore, can accurately determine whether or not the mail can be identified in the resupply process during the primary supply process.

The ID bar-code printing unit 5 prints the ID bar-code on the mail determined that identification thereof is impossible. The mail determined that identification thereof is possible is identified through the image recognition in the resupply process. The identifying unit 3d can accurately determine whether or not it is necessary to attach the ID bar-code on the mail. It becomes possible that running cost for printing is minimized and identification for the mail in the resupply process is accurately carried out thereby.

The second exemplary embodiment describes that the imaging unit 1 generates the gray image having, for example, 256 gradations and 200 resolutions (dpi). The imaging unit 1 may be a color scanner generating an image data including R, G, B each having 256 gradations. The feature extracting unit 3b may choose color information as one of image features. Since extractable image features increase, thereby the mail sorting system can accurately acquire the feature of the mail and can accurately identify the mail in the resupply process.

### < A third exemplary embodiment >

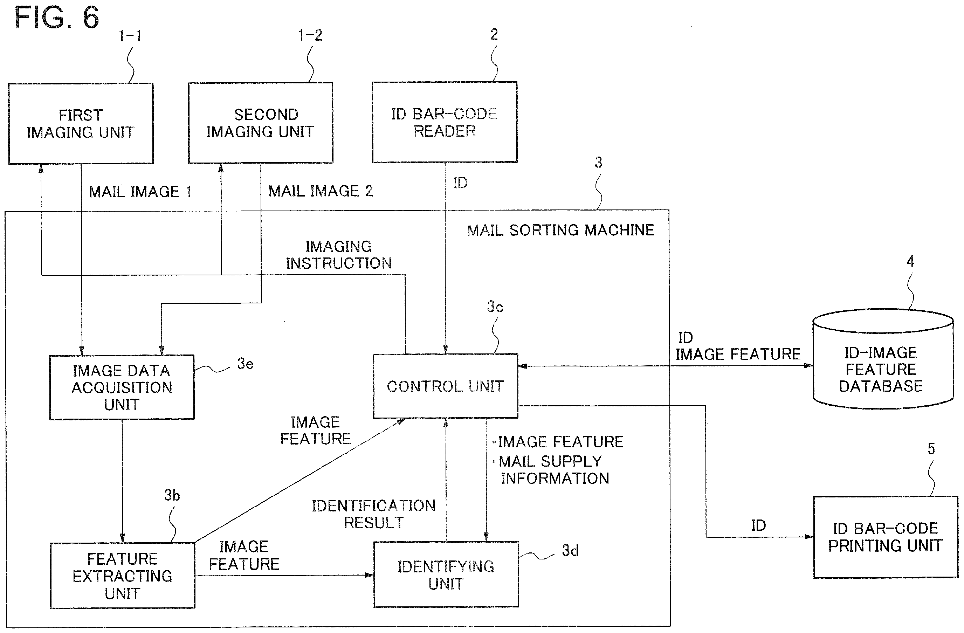

Next, a third exemplary embodiment of the present invention is described below. FIG. 6 is a schematic block diagram illustrating a mail sorting machine of the third exemplary embodiment. In the third exemplary embodiment, the mail sorting machine 3 includes two imaging units 1, that is, a first imaging unit 1-1 and a second imaging unit 1-2. The variation image generation unit 3a of the first exemplary embodiment is not included in the mail sorting machine 3 of the third exemplary embodiment. Since the other configuration of the third exemplary embodiment is the same as that of the first exemplary embodiment, descriptions on details of the overlapped parts are omitted.

In the primary supply process, each of the first imaging unit 1-1 and the second imaging unit 1-2 images a mail.

The image data acquisition unit 3e informs the feature extracting unit 3b of a mail image data acquired from the first imaging unit 1-1. The image data acquisition unit 3e informs the feature extracting unit 3b of a mail image data acquired from the second imaging unit 1-2 as a variation image data.

An imaging device imaging a mail as the primary supply process may be different from an imaging device imaging the same mail as the resupply process. When the same mail is imaged by the different imaging device, a difference may occur in the acquired mail image data. In the third exemplary embodiment, since the mail sorting machine 3 includes the second imaging unit 1-2, the image data acquired by the device which is different from the first imaging unit 1-1 can be treated as the variation image data. The mail sorting machine 3 can determines (predict) whether or not identification through the image recognition is possible in the resupply process by considering that the imaging device other than the imaging device performing the primary process images the mail when the resupply process is carried out.

### < A fourth exemplary embodiment >

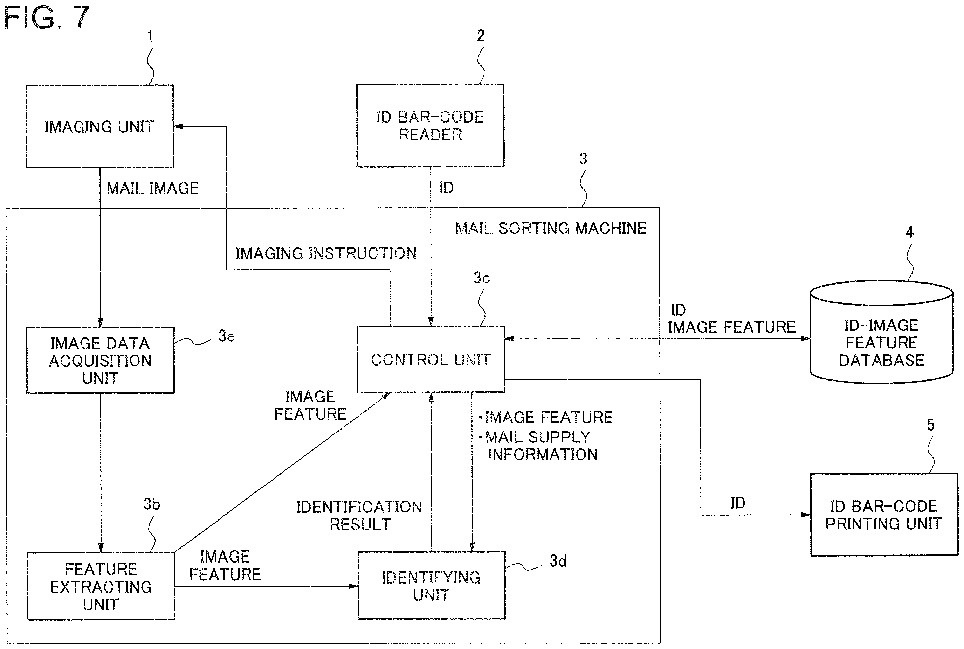

A fourth exemplary embodiment is described. FIG. 7 is a block diagram illustrating the mail sorting machine of the fourth exemplary embodiment. In the fourth exemplary embodiment, the mail sorting machine 3 lacks the variation image generation unit 3a included in the first exemplary embodiment. The operation of the identifying unit 3d is different from that of the first exemplary embodiment. Since the other configuration of the fourth exemplary embodiment is the same as that of the first exemplary embodiment, descriptions on details of the overlapped parts are omitted.

In the fourth exemplary embodiment, the identifying unit 3d acquires an image feature data from the feature extracting unit 3b. The identifying unit 3d determines whether or not the image feature data includes image feature more than or equal to a predetermined constant amount. The image feature data is a data representing a position and a size of a block area acquired based on the binarized image formed by binarizing an image data by using a predetermined threshold value, as described below. The identifying unit 3d determines whether or not the image feature data includes the number of the block area and the size thereof more than or equal to the constant amount. The identifying unit 3d determines, for example, whether or not at least 20 blocks each having the size of not less than 10×10 pixels are detected in the image feature data. When determining not less than the constant amount of the image feature is not included, the identifying unit 3d determines that extraction of the image feature fails and an identification process through the image recognition is impossible when the resupply process is carried out.

In the fourth exemplary embodiment, the identifying unit 3d determines whether or not a mail is identified through the image recognition when the resupply process is carried out, based on the amount of image feature included in the image feature data. Since such configuration is adopted, the identifying unit 3d can know whether or not the identification process through the image recognition is possible when the resupply process is carried out, while the primary supply process is carried out.

### < A fifth exemplary embodiment >

A fifth exemplary embodiment is described below for detailed descriptions of the present invention.

The fifth exemplary embodiment describes the second exemplary embodiment in detail. A configuration of a mail sorting system in the fifth exemplary embodiment is the same as the configuration described in the second exemplary embodiment (see FIG. 3).

### (Primary supply process)

Initially, operations of the primary supply process are described.

When a mail is supplied to the mail sorting system, the imaging unit 1 images the mail and generates a gray image having 256 gradations and 200 resolutions (dpi) as the mail image data. The imaging unit 1 supplies the mail image data to the variation image generation unit 3a and the feature extracting unit 3b via the image data acquisition unit 3e. A device generating a color image may be employed as the imaging unit 1.

The variation image generation unit 3a calculates change in the mail image data predicted to be acquired by the resupply process by the simulation based on the mail image data. The variation image generation unit 3a generates the variation image data reflecting the predicted change in the mail image data. The variation image generation unit 3a sends the generated variation image data to the feature extracting unit 3b.

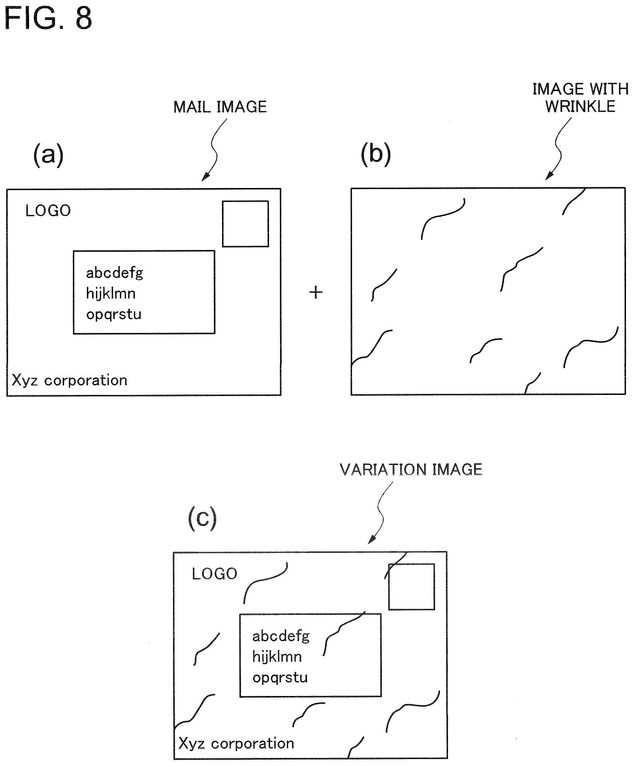

Methods of generating the variation image data includes, for example, following methods (1) to (5).
(1) Stain or dirt of a mail, wrinkles of a vinyl envelope, or the like is attached to mail image data as variations.
   Appearance of a mail may change due to wrinkles or dirt. The variation image generation unit 3a prepares appearance change images like an image with wrinkles, an image with dirt and the like in advance, and generates variation image data based on these images. FIG. 8 is an explanatory diagram illustrating an example of a method of generating a variation image data when the image with wrinkles is employed as the appearance change image. (a) of FIG. 8 illustrates the mail image data. The variation image generation unit 3a acquires a prepared image data including the image with wrinkles. (b) of FIG. 8 illustrates a data of the image with wrinkles. The variation image generation unit 3a generates the variation image data by adding the data of the image with wrinkles to the mail image data. (c) of FIG. 8 illustrates the variation image data.
   The imaging unit 1 images, for example, a white mail having no patterns in advance in order to acquire the image with wrinkles. Next, an operator supplies the white mail to the mail sorting machine 3. When the mail sorting machine 3 carries the mail, wrinkles occur. The imaging unit 1 images the mail with wrinkles again. The variation image generation unit 3a can acquire the image of wrinkles by acquiring a difference between before and after occurrence of wrinkles and dirt. When an image with dirt is employed as the appearance change image, the variation image generation unit 3a can acquire the image with dirt by using the same method.
   The appearance change image may be one of the image with wrinkles and the image with dirt or may be an image which is a combination of both of the image with wrinkles and the image with dirt. An image representing a change other than dirt and wrinkles in the appearance may be employed. The change in the appearance which is likely to occur in the mail depends on material of the mail. If the mail is made of a vinyl envelope, stain or dirt is likely to occur compared with wrinkles. If the mail is made of a paper envelope, wrinkles are likely to occur compared with stains or dirt. Therefore, an image used as the appearance change image may be selected corresponding to the material of the mail. A device identifying the material of the mail which is not shown is installed in the mail sorting system. The variation image generation unit 3a may determine the image employed as the appearance change image based on the identification result of the device. Appearance change which is really likely to occur can be reflected to the variation image data thereby.
(2) Tilt of the mail due to conveyance is considered
   The mail may tilt during conveyance. If tilt of the mail during the primary supply process is different from tilt thereof during resupply process, the same mail image data as the mail image data acquired in the primary supply process cannot be acquired in the resupply process. The variation image generation unit 3a generates variation image data in consideration of tilt of the mail. Specifically, the variation image generation unit 3a carries out a process of rotating the mail image data within the range of predetermined angles by using affine transformation. More specifically, the variation image generation unit 3a generates tilted images in which the mail image data is rotated by - 5 degrees, - 3 degrees, + 3 degrees and + 5 degrees. The variation image generation unit 3a generates the variation image data based on the tilted images.
(3) Stretching and shrinking in an image due to an error of conveyance speed are considered.
   The imaging unit 1 may image the mail during conveyance. In such case, the mail image in the mail image data may be stretched or shrunk in the conveyance direction. The variation image generation unit 3a generates variation image data in consideration of that. Specifically, the variation image generation unit 3a generates a stretched or shrunk image by stretching or shrinking an image in the mail image data within a predetermined range by using affine transformation. The variation image generation unit 3a generates the variation image data based on the stretched or shrunk image. Specifically, the variation image generation unit 3a generates the stretched or shrunk images in which the mail image data is, for example, shrunk or stretched by-0.5%, -0.3%, + 0.3% and + 0.5%. The variation image generation unit 3a uses these stretched and shrunk images as the variation image data.
(4) Image density due to an individual difference of a scanner is considered.
   Sort of a mail is usually conducted by a plurality of devices. The sort may be conducted in a plurality of stations. Therefore, in the resupply process, the mail may be sorted by a device different from the device which carries out the primary supply process. Accordingly, the imaging unit generating the mail image data used in the primary supply process is rarely used in the resupply process. In the same type of devices, perfect matching of device configurations is very rare.
   The variation image generation unit 3a generates a variation image in consideration of a difference in the mail image data due to a difference in the imaging unit 1. Specifically, the variation image generation unit 3a generates a gray image by changing density of the image in the mail image data. The variation image generation unit 3a generates the variation image data based on the gray image. The variation image generation unit 3a integrates a predetermined numerical value into a density value (0-255) of pixels included in the mail image data, and generates the variation image data. More specifically, the variation image generation unit 3a uses an image data having 0.95 times and 1.05 times a density value of all pixels, as the variation image data. The density values of pixels are represented as integers 0 to 255. Therefore, the variation image generation unit 3a omits values after the decimal point and treats values more than 255 as 255.
(5) Blur of an image is considered.

When an environment where the mail is imaged changes, or when resolution of the imaging unit 1 is low, an outline of a line in an image (e.g. outline of address letter) may blurs. The variation image generation unit 3a generates an image, on which blur occurs, based on the mail image data by using a 3×3 average filter commonly used in image processing. The variation image generation unit 3a uses the generated image as the variation image data.

The variation image generation unit 3a employs the methods (1) to (5) above described and generates the variation image data. The identifying unit 3d can accurately determine whether or not the mail is identified by the image processing in the resupply process, based on the mail image data acquired in the primary supply process. The variation image generation unit 3a may generate by employing one of the methods (1) to (5) above described. Otherwise, the variation image generation unit 3a may employ the methods (1) to (5) in order. Further, the variation image generation unit 3a may select the methods to be employed in the methods (1) to (5) above described, if necessary.

A matter related to the above method (2) is described. Ease of tilt in the mail during conveyance is thought to be dependent on a size, weight or the like of the mail. It is understood that the smaller and lighter the mail is, the easier to tilt it is during conveyance. Therefore, when a device measuring at least one of the size of the mail and the weight of the mail is installed in the mail sorting machine 3, the variation image generation unit 3a can determine whether or not the above method (2) should be employed based on the measurement result of the device.

A matter related to the above method (3) is described. It is understood that stretching and shrinking of an image due to imaging the mail during conveyance depends on the weight of the mail. Conveying speed of the mail may depend on the weight. Therefore, stretching and shrinking of an image depends on the conveying speed of the mail. If the conveying speed is high, an image is likely to be stretched. When the device measuring the weight of the mail is installed in the mail sorting machine 3, the variation image generation unit 3a can determine whether or not the above method (3) should be employed based on the measurement result of the device.

A matter related to the above method (5) is described. A level of the blur in an image may depend on material of the mail. For example, if the mail is made of a vinyl envelope, the image hardly blurs. If the mail is made of a paper envelope, the image easily blurs. When the device measuring the material of the mail is installed in the mail sorting machine 3, the variation image generation unit 3a can determine whether or not the above method (5) should be employed based on the measurement result of the device.

The variation image generation unit 3a selects the method to be employed if needed as described above, and can generates the optimum variation image data by the minimum process.

The identifying unit 3d predicts whether or not image recognition of the mail in the resupply process is possible based on the variation image data generated as described above and the mail image data in the primary supply process. The variation image generation unit 3a predicts the change, which may occur in the mail before the resupply process, by the simulation based on the mail image data acquired by the primary supply process. The variation image data corresponding to the mail, on which it is predicted that significant change may occur according to the simulation result, quite changes from the mail image data in the primary supply process. If the amount of the change is greater than a predetermined threshold value, the identifying unit 3d determines that the mail cannot be identified in the resupply process. If the amount of the change is lower than the threshold value, the identifying unit 3d determines that the mail can be identified in the resupply process. The identifying unit 3d can acquire a predicted amount of the change by calculating the size of the area where the image feature acquired from the mail image data in the primary supply process overlaps with the image feature acquired from the variation image data in the resupply process. The identifying unit 3d determines whether or not identification in the resupply process is possible based on the size of the overlapped area.

Details of the identification process are described below.

The variation image generation unit 3a supplies the generated variation image data to the feature extracting unit 3b. The image data acquisition unit 3e supplies the mail image data to the feature extracting unit 3b as described above. The feature extracting unit 3b extracts the image feature for identification from each of the acquired mail image data and the variation image data. The image feature extracted from the mail image data is described as a mail image feature data, and the image feature extracted from the variation image data is described as a variation image feature data below. The feature extracting unit 3b supplies the mail image feature data and the variation image feature data to the control unit 3c and the identifying unit 3d.

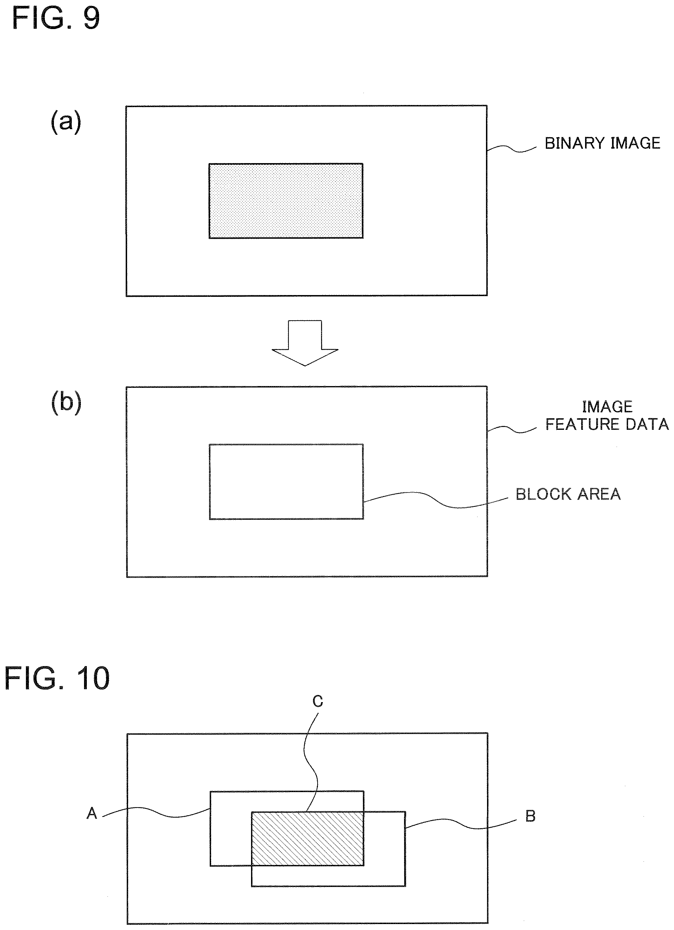

Next, processes for extracting the image feature data are described. FIG. 9 is a conceptual diagram illustrating the processes for extracting the image feature data. As shown in (a) of FIG. 9, specifically, the feature extracting unit 3b generates binary images (target object image binary data and variation image binary data). The binary image can be generated, for example, by binarizing an image data by using a predetermined threshold value. The feature extracting unit 3b performs a labeling process with respect to a black pixel on the binary images. The feature extracting unit 3b detects a block area from the images after the labeling process, as shown in (b) of FIG. 9. The feature extracting unit 3b extracts the data representing the position and the size of the detected block area as the image feature data in the image data.

Acquiring the mail image feature data and the variation image feature data, the identifying unit 3d compares the image feature data with each other. The identifying unit 3d determines whether or not the mail can be identified through image recognition in the resupply process. The identifying unit 3d sends the determination result to the control unit 3c. FIG. 10 is a conceptual diagram illustrating a process for comparing each image feature data. As show in FIG. 10, the identifying unit 3d superimposes the mail image feature data and the variation image feature data each other. The identifying unit 3d calculates an area C (overlapped area) where a block area A represented in the mail image feature data and a block area B represented in the variation image feature data are overlapped each other. The identifying unit 3d compares the size of the overlapped area C (the number of pixels) with a predetermined threshold value. Based on the result of the comparison, the identifying unit 3d determines that potential change is small, that is, the mail can be identified in the resupply process, when the number of pixels in the overlapped area is larger than the threshold value. On the other hand, the identifying unit 3d determines that potential change is large, that is, the mail cannot be identified in the resupply process, when the number of pixels in the overlapped area is equal to or less than the threshold value.

More specifically, the identifying unit 3d calculates the number of pixels within the overlapped area C. The identifying unit 3d compares the total number of pixels included in the block area A and the total number of pixels included in the block area B, and outputs the number of pixels greater than the other. The identifying unit 3d calculates "the number of overlapped pixels divided by the number of pixels greater than the other" and determines whether or not the mail can be identified in the resupply process based on comparison between the calculation result and the threshold value.

When it is determined that identification is possible in the resupply process, the control unit 3c attaches ID information to the mail image feature data and registers it in the ID-image feature database 4. If it is determined that identification is impossible in the resupply process, the control unit 3c sends the ID information to the ID bar-code printing unit 5. The ID bar-code printing unit 5 prints an ID bar-code on the mail.

### (Resupply process)

Next, operations of the resupply process are described.

Initially, the ID bar-code reader 2 determines whether or not the ID bar-code is already printed on the mail. When printing is already carried out, the ID bar-code reader 2 reads the printed ID bar-code and identifies the ID information. The mail sorting machine 3 sorts the mail based on the identified ID information.

If the ID bar-code is not printed, the control unit 3c instructs the imaging unit 1 to image the mail. On receiving the instruction, the imaging unit 1 images the mail. The imaging unit 1 generates a gray image having 256 gradations and 200 resolutions (dpi) as the mail secondary image data. The imaging unit 1 sends the mail secondary image data to the feature extracting unit 3b.

The feature extracting unit 3b extracts an image feature for using in the identification process from the mail secondary image data corresponding to the resupplied mail. The feature extracting unit 3b sends the extracted image feature as the mail image feature data to the identifying unit 3d. Specifically, the feature extracting unit 3b generates a binary image (image acquired by binarizing the acquired mail secondary image data by using e predetermined threshold value) like the primary supply process. The feature extracting unit 3b performs the labeling process with respect with the black pixel on the binary image. The feature extracting unit 3b detects a block from the binary image. The feature extracting unit 3b extracts the position and the size of the detected block as the mail image feature data.

The identifying unit 3d compares the acquired mail image feature data with the image feature data registered in the ID-image feature database 4. The identifying unit 3d searches the image feature data which accords with the acquired mail image feature data (perform identification process).

In the fifth exemplary embodiment, the identifying unit 3d acquires the area where the block of the image feature data in the resupply process and the block of the image feature data registered in the ID-image feature database 4 in the primary supply process are overlapped. A data, in which the area where the blocks are overlapped is the largest and the size of the area is larger than a predetermined threshold value, is selected from the data registered in the ID-image feature database 4 as the identification result. Specifically, the identifying unit 3d calculates "(the number of pixels in the area where the block in the primary supply and the block in the resupply are overlapped) divided by (the number of pixels included in the block in the primary supply or the number of pixels included in the block in the resupply, whichever is greater)" and identifies the mail based on the calculation result.

The identifying unit 3d sends the identification result to the control unit 3c. The control unit 3c conducts the mail sorting process based on the identification result.

While the invention has been particularly shown and described with reference to exemplary embodiments thereof, the invention is not limited to these exemplary embodiments. It will be understood by those of ordinary skill in the art that various changes in form and details may be made therein without departing from the spirit and scope of the present invention as defined by the claims.

This application is based upon and claims the benefit of priority from Japanese patent application No. 2009-080518, filed on March 27, 2009, the disclosure of which is incorporated herein in its entirety by reference.

### [Industrial Applicability]

The present invention can be applied to a mail delivery system, and the like which conducts a resupply process for delivering objects which cannot be delivered.

### [Reference Signs List]

1 imaging unit, 1-1 first imaging unit, 1-2 second imaging unit, 2 ID bar-code reader, 3 mail sorting machine, 3a variation image generation unit, 3b feature extracting unit, 3c control unit, 3d identifying unit, 3e image data acquisition unit, 4 id-image feature database, 5 ID bar-code printing unit

## Claims

1. An article sorting machine, comprising:
image data acquisition means (3e) for acquiring an image of a target object as a target object image data; and
variation image generation means (3a) for generating variation image data similar to the target object image data;
**characterized by**:
identifying means (3d) for determining whether or not identification of the target object is possible by comparing a target object secondary image data acquired by imaging the target object again with the target object image data, by comparing the target object image data with the variation image data; and
control means (3c) for executing processing for identifying the target object based on the determination result of the identifying means (3d).

2. The article sorting machine according to claim 1, wherein the control means (3c) prints identification information on the target object by using a printing mechanism (5) when the identifying means (3d) determine that the target object cannot be identified.

3. The article sorting machine according to claim 1, further comprising:
storage means (4),
wherein the control means (3c) attaches identification information of the target object to the target object image data and stores it into the storage means (4), when the identifying means determine that the target object can be identified.

4. The article sorting machine according to any one of claims 1 to 3, wherein the image data acquisition means (3e) acquires a first image data acquired by imaging the target object by first imaging means (1-1), as the target object image data,
the variation image generation means (3a) acquires a second image data acquired by imaging the target object by second imaging means (1-2), as the variation image data, and
the identifying means (3d) determines whether or not the target object can be identified by comparing the target object image data with the variation image data.

5. The article sorting machine according to any one of claims 1 to 4, wherein the identifying means (3d) determines whether or not the target object can be identified by comparing a target object image binary data acquired by binarizing the target object image data with a variation image binary data acquired by binarizing the variation image data.

6. The article sorting machine according to claim 5, wherein the identifying means (3d) extracts an area where a target object block area extracted from the target object image binary data overlaps a variation image block area extracted from the variation image binary data, and determines whether or not the target object can be identified based on a size of the overlapped area.

7. The article sorting machine according to any one of claims 1 to 6, wherein the variation image generation means (3a) generates the variation image data based on an image in which an appearance change image is attached to the target object image data.

8. The article sorting machine according to any one of claims 1 to 7, wherein the variation image generation means (3a) generates the variation image data based on a tilted image in which tilt of an image in the target object image data is changed.

9. The article sorting machine according to any one of claims 1 to 8, wherein the variation image generation means (3a) generates the variation image data based on a stretching and shrinking image in which an image in the target object image data is stretched or shrunk.

10. The article sorting machine according to any one of claims 1 to 9, wherein the variation image generation means (3a) generates the variation image data based on a gray image in which intensity of an image in the target object image data is changed.

11. An article sorting method, comprising:
a step (S2) of acquiring an image of a target object as a target object image data; and
a step (S3) of generating a variation image data similar to the target object image data;
**characterized by**:
a step (S5) of comparing the target object image data with the variation image data and determining whether or not the target object can be identified when a target object secondary image data acquired by imaging the target object again is compared with the target object image data; and
a step (S6) of executing processing for identifying the target object based on the determination result of the identifying means.

12. The article sorting method according to claim 11, further comprising:
a step (S7) of printing identification information on the target object by using a printing mechanism when it is determined that the target object cannot be identified.

13. The article sorting method according to claim 11 or 12, further comprising:
a step of attaching identification information of the target object to the target object image data and storing into storage means, when it is determined that the target object can be identified.

14. The article sorting method according to any one of claims 11 to 13, wherein the step (S2) of acquiring as the target object image data includes a step of acquiring a first image data acquired by imaging the target object by first imaging means, as the target object image data,
the step (S3) of generating the variation image data includes a step of acquiring a second image data acquired by imaging the target object by second imaging means, as the variation image data, and
the step (S5) of determining whether or not identification is possible includes a step of determining whether or not identification is possible by comparing the target object image data with the variation image data.

15. The article sorting method according to any one of claims 11 to 14, wherein the step (S5) of determining whether or not identification is possible includes a step of comparing a target object image binary data acquired by binarizing the target object image data with a variation image binary data acquired by binarizing the variation image data, and determining whether or not identification is possible on the basis of the comparison result.

16. The article sorting method according to any one of claims 11 to 15, wherein the step (S5) of determining whether or not identification is possible includes a step of extracting an area where a target object block area extracted from the target object image binary data overlaps a variation image block area extracted from the variation image binary data, and determining whether or not identification is possible based on a size of the overlapped area.

17. The article sorting method according to any one of claims 11 to 16, wherein the step (S3) of generating a variation image data includes a step of generating the variation image data based on an image in which an image with a wrinkle or an image with dirt is attached to the target object image data.

18. The article sorting method according to any one of claims 11 to 17, wherein the step (S3) of generating the variation image data includes a step of generating the variation image data based on a tilted image in which tilt of an image in the target object image data is changed.

19. The article sorting method according to any one of claims 11 to 18, wherein the step (S3) of generating the variation image data includes a step of generating the variation image data based on a stretching and shrinking image in which an image in the target object image data is shrunk.

20. The article sorting method according to any one of claims 11 to 19, wherein the step (S3) of generating the variation image data includes a step of generating the variation image data based on a gray image in which intensity of an image in the target object image data is changed.

21. Computer program product comprising a computer program adapted to cause a computer to execute the article sorting method of any one of claims 11 to 20.

## Patentansprüche

1. Artikelsortiermaschine mit:
einer Bilddatenerfassungseinrichtung (3e) zum Erfassen eines Bildes eines Zielobjekts als Zielobjektbilddaten; und
einer Variationsbilderzeugungseinrichtung (3a) zum Erzeugen von den Zielobjektbilddaten ähnlichen Variationsbilddaten;
**gekennzeichnet durch**
eine Identifizierungseinrichtung (3d) zum Bestimmen, ob eine Identifizierung des Zielobjekts **durch** Vergleichen von ZielobjektSekundärbilddaten, die **durch** erneutes Abbilden des Zielobjekts erfasst werden, mit den Zielobjektbilddaten möglich ist oder nicht, **durch** Vergleichen der Zielobjektbilddaten mit den Variationsbilddaten; und
eine Steuereinrichtung (3c) zum Ausführen einer Verarbeitung zum Identifizieren des Zielobjekts basierend auf dem Bestimmungsergebnis der Identifizierungseinrichtung (3d).

2. Artikelsortiermaschine nach Anspruch 1, wobei die Steuereinrichtung (3c) Identifizierungsinformation unter Verwendung eines Druckmechanismus (5) auf das Zielobjekt druckt, wenn die Identifizierungseinrichtung (3d) bestimmt, dass das Zielobjekt nicht identifiziert werden kann.

3. Artikelsortiermaschine nach Anspruch 1, ferner mit:
einer Speichereinrichtung (4),
wobei die Steuereinrichtung (3c) den Zielobjektbilddaten Identifizierungsinformation des Zielobjekts hinzufügt und in der Speichereinrichtung (4) speichert, wenn die Identifizierungseinrichtung bestimmt, dass das Zielobjekt identifiziert werden kann.

4. Artikelsortiermaschine nach einem der Ansprüche 1 bis 3, wobei
die Bilddatenerfassungseinrichtung (3e) erste Bilddaten, die durch Abbilden des Zielobjekts durch eine erste Abbildungseinrichtung (1-1) erfasst werden, als die Zielobjektbilddaten erfasst,
die Variationsbilderzeugungseinrichtung (3a) zweite Bilddaten, die durch Abbilden des Zielobjekts durch eine zweite Abbildungseinrichtung (1-2) erfasst werden, als die Variationsbilddaten erfasst, und
die Identifizierungseinrichtung (3d) durch Vergleichen der Zielobjektbilddaten mit den Variationsbilddaten bestimmt, ob das Zielobjekt identifiziert werden kann.

5. Artikelsortiermaschine nach einem der Ansprüche 1 bis 4, wobei die Identifizierungseinrichtung (3d) durch Vergleichen von durch Binarisieren der Zielobjektbilddaten erhaltenen Zielobjektbildbinärdaten mit durch Binarisieren der Variationsbilddaten erhaltenen Variationsbildbinärdaten bestimmt, ob das Zielobjekt identifiziert werden kann oder nicht.

6. Artikelsortiermaschine nach Anspruch 5, wobei die Identifizierungseinrichtung (3d) einen Bereich extrahiert, in dem ein von den Zielobjektbildbinärdaten extrahierter Zielobjektblockbereich einen von den Variationsbildbinärdaten extrahierten Variationsbildblockbereich überlappt, und basierend auf einer Größe des Überlappungsbereichs bestimmt, ob das Zielobjekt identifiziert werden kann oder nicht.

7. Artikelsortiermaschine nach einem der Ansprüche 1 bis 6, wobei die Variationsbilderzeugungseinrichtung (3a) die Variationsbilddaten basierend auf einem Bild erzeugt, in dem den Zielobjektbilddaten ein Erscheinungsbildänderungsbild hinzugefügt ist.

8. Artikelsortiermaschine nach einem der Ansprüche 1 bis 7, wobei die Variationsbilderzeugungseinrichtung (3a) die Variationsbilddaten basierend auf einem geneigten Bild erzeugt, in dem eine Neigung eines Bildes in den Zielobjektbilddaten geändert ist.

9. Artikelsortiermaschine nach einem der Ansprüche 1 bis 8, wobei die Variationsbilderzeugungseinrichtung (3a) die Variationsbilddaten basierend auf einem Streckungs- und Schrumpfungsbild erzeugt, in dem ein Bild in den Zielobjektbilddaten gestreckt oder geschrumpft ist.

10. Artikelsortiermaschine nach einem der Ansprüche 1 bis 9, wobei die Variationsbilderzeugungseinrichtung (3a) die Variationsbilddaten basierend auf einem Graustufenbild erzeugt, in dem die Intensität eines Bildes in den Zielobjektbilddaten geändert ist.

11. Artikelsortierverfahren mit:
einem Schritt (S2) zum Erfassen eines Zielobjekts als Zielobjektbilddaten; und
einem Schritt (S3) zum Erfassen von den Zielobjektbilddaten ähnlichen Variationsbilddaten;
**gekennzeichnet durch**:
einen Schritt (S5) zum Vergleichen der Zielobjektbilddaten mit den Variationsbilddaten und zum Bestimmen, ob das Zielobjekt identifiziert werden kann oder nicht, wenn Zielobjektsekundärbilddaten, die **durch** erneutes Abbilden des Zielobjekts erhalten werden, mit den Zielobjektbilddaten verglichen werden; und
einen Schritt (S6) zum Ausführen einer Verarbeitung zum Identifizieren des Zielobjekts basierend auf dem Bestimmungsergebnis der Identifizierungseinrichtung.

12. Artikelsortierverfahren nach Anspruch 11, ferner mit
einem Schritt (S7) zum Drucken von Identifizierungsinformation auf das Zielobjekt unter Verwendung eines Druckmechanismus, wenn bestimmt wird, dass das Zielobjekt nicht identifiziert werden kann.

13. Artikelsortierverfahren nach Anspruch 11 oder 12, ferner mit
einem Schritt zum Hinzufügen von Identifizierungsinformation des Zielobjekts zu den Zielobjektbilddaten und zum Speichern der Information in einer Speichereinrichtung, wenn bestimmt wird, dass das Zielobjekt identifiziert werden kann.

14. Artikelsortierverfahren nach einem der Ansprüche 11 bis 13, wobei
der Schritt (S2) zum Erfassen eines Zielobjekts als Zielobjektbilddaten einen Schritt zum Erfassen erster Bilddaten, die durch Abbilden des Zielobjekts durch eine erste Abbildungseinrichtung erhalten werden, als die Zielobjektbilddaten aufweist,
der Schritt (S3) zum Erzeugen der Variationsbilddaten einen Schritt zum Erfassen zweiter Bilddaten, die durch Abbilden des Zielobjekts durch eine zweite Abbildungseinrichtung erhalten werden, als die Variationsbilddaten aufweist, und
der Schritt (S5) zum Bestimmen, ob eine Identifizierung möglich ist oder nicht, einen Schritt aufweist, in dem durch Vergleichen der Zielobjektbilddaten mit den Variationsbilddaten bestimmt wird, ob eine Identifizierung möglich ist oder nicht.

15. Artikelsortierverfahren nach einem der Ansprüche 11 bis 14, wobei der Schritt (S5) zum Bestimmen, ob eine Identifizierung möglich ist oder nicht, einen Schritt zum Vergleichen von Zielobjektbildbinärdaten, die durch Binarisieren der Zielobjektbilddaten erhalten werden, mit Variationsbildbinärdaten, die durch Binarisieren der Variationsbilddaten erhalten werden, und zum Bestimmen, ob eine Identifizierung möglich ist oder nicht, auf der Basis des Vergleichsergebnisses aufweist.

16. Artikelsortierverfahren nach einem der Ansprüche 11 bis 15, wobei der Schritt (S5) zum Bestimmen, ob eine Identifizierung möglich ist oder nicht, einen Schritt zum Extrahieren eines Bereichs, in dem ein von den Zielobjektbildbinärdaten extrahierter Zielobjektblockbereich einen von den Variationsbildbinärdaten extrahierten Variationsbildblockbereich überlappt, und zum Bestimmen, ob eine Identifizierung möglich ist oder nicht, basierend auf einer Größe des Überlappungsbereichs aufweist.

17. Artikelsortierverfahren nach einem der Ansprüche 11 bis 16, wobei der Schritt (S3) zum Erzeugen von Variationsbilddaten einen Schritt zum Erzeugen der Variationsbilddaten basierend auf einem Bild aufweist, in dem den Zielobjektbilddaten ein Bild mit einer Falte oder ein Bild mit einer Verschmutzung hinzugefügt ist.

18. Artikelsortierverfahren nach einem der Ansprüche 11 bis 17, wobei der Schritt (S3) zum Erzeugen der Variationsbilddaten einen Schritt zum Erzeugen der Variationsbilddaten basierend auf einem geneigten Bild aufweist, in dem eine Neigung eines Bildes in den Zielobjektbilddaten geändert ist.

19. Artikelsortierverfahren nach einem der Ansprüche 11 bis 18, wobei der Schritt (S3) zum Erzeugen der Variationsbilddaten einen Schritt zum Erzeugen der Variationsbilddaten basierend auf einem Streckungs- und Schrumpfungsbild aufweist, in dem ein Bild in den Zielobjektbilddaten geschrumpft ist.

20. Artikelsortierverfahren nach einem der Ansprüche 11 bis 19, wobei der Schritt (S3) zum Erzeugen der Variationsbilddaten einen Schritt zum Erzeugen der Variationsbilddaten basierend auf einem Graustufenbild aufweist, in dem eine Intensität eines Bildes in den Zielobjektbilddaten geändert ist.

21. Computerprogrammprodukt mit einem Computerprogramm, das dazu geeignet ist, einen Computer zu veranlassen, das Artikelsortierverfahren nach einem der Ansprüche 11 bis 20 auszuführen.

## Revendications

1. Machine de tri d'articles, comprenant :
un moyen d'acquisition de données d'image (3e) pour acquérir une image d'un objet cible en tant que données d'image d'objet cible ; et
un moyen de génération d'image de variation (3a) pour générer des données d'image de variation similaires aux données d'image d'objet cible ;
**caractérisée par** :
un moyen d'identification (3d) pour déterminer si oui ou non l'identification de l'objet cible est possible en comparant des données d'image secondaires d'objet cible acquises en imageant l'objet cible à nouveau avec les données d'image d'objet cible, en comparant les données d'image d'objet cible avec les données d'image de variation ; et
un moyen de commande (3c) pour exécuter un traitement pour identifier l'objet cible sur la base du résultat de détermination du moyen d'identification (3d).

2. Machine de tri d'articles selon la revendication 1, dans laquelle le moyen de commande (3c) imprime des informations d'identification sur l'objet cible en utilisant un mécanisme d'impression (5) lorsque le moyen d'identification (3d) détermine que l'objet cible ne peut pas être identifié.

3. Machine de tri d'articles selon la revendication 1, comprenant en outre :
un moyen de stockage (4),
dans lequel le moyen de commande (3c) rattache des informations d'identification de l'objet cible aux données d'image d'objet cible et les stocke dans le moyen de stockage (4), lorsque le moyen d'identification détermine que l'objet cible peut être identifié.

4. Machine de tri d'articles selon l'une quelconque des revendications 1 à 3, dans laquelle le moyen d'acquisition de données d'image (3e) acquiert des premières données d'image acquises en imageant l'objet cible par un premier moyen d'imagerie (1-1), en tant que données d'image d'objet cible,
le moyen de génération d'image de variation (3a) acquiert des secondes données d'image acquises en imageant l'objet cible par un second moyen d'imagerie (1-2), en tant que données d'image de variation, et
le moyen d'identification (3d) détermine si oui ou non l'objet cible peut être identifié en comparant les données d'image d'objet cible avec les données d'image de variation.

5. Machine de tri d'articles selon l'une quelconque des revendications 1 à 4, dans laquelle le moyen d'identification (3d) détermine si oui ou non l'objet cible peut être identifié en comparant des données binaires d'image d'objet cible acquises en binarisant les données d'image d'objet cible avec des données binaires d'image de variation acquises en binarisant les données d'image de variation.

6. Machine de tri d'articles selon la revendication 5, dans laquelle le moyen d'identification (3d) extrait une zone où une zone de bloc d'objet cible extraite des données binaires d'image d'objet cible chevauche une zone de bloc d'image de variation extraite des données binaires d'image de variation, et détermine si oui ou non l'objet cible peut être identifié sur la base d'une taille de la zone chevauchée.

7. Machine de tri d'articles selon l'une quelconque des revendications 1 à 6, dans laquelle le moyen de génération d'image de variation (3a) génère les données d'image de variation sur la base d'une image dans laquelle une image de changement d'apparence est rattachée aux données d'image d'objet cible.

8. Machine de tri d'articles selon l'une quelconque des revendications 1 à 7, dans laquelle le moyen de génération d'image de variation (3a) génère les données d'image de variation sur la base d'une image inclinée dans laquelle l'inclinaison d'une image dans les données d'image d'objet cible est changée.

9. Machine de tri d'articles selon l'une quelconque des revendications 1 à 8, dans laquelle le moyen de génération d'image de variation (3a) génère les données d'image de variation sur la base d'une image d'étirement et de rétrécissement dans laquelle une image dans les données d'image d'objet cible est étirée ou rétrécie.

10. Machine de tri d'articles selon l'une quelconque des revendications 1 à 9, dans laquelle le moyen de génération d'image de variation (3a) génère les données d'image de variation sur la base d'une image de gris dans laquelle l'intensité d'une image dans les données d'image d'objet cible est changée.

11. Procédé de tri d'articles, comprenant :
une étape (S2) consistant à acquérir une image d'un objet cible en tant que données d'image d'objet cible ; et
une étape (S3) consistant à générer des données d'image de variation similaires aux données d'image d'objet cible ;
**caractérisé par** :
une étape (S5) consistant à comparer les données d'image d'objet cible avec les données d'image de variation et déterminer si oui ou non l'objet cible peut être identifié lorsque des données d'image secondaires d'objet cible acquises en imageant l'objet cible à nouveau sont comparées avec les données d'image d'objet cible ; et
une étape (S6) consistant à exécuter un traitement pour identifier l'objet cible sur la base du résultat de détermination du moyen d'identification.

12. Procédé de tri d'articles selon la revendication 11, comprenant en outre :
une étape (S7) consistant à imprimer des informations d'identification sur l'objet cible en utilisant un mécanisme d'impression lorsqu'il est déterminé que l'objet cible ne peut pas être identifié.

13. Procédé de tri d'articles selon la revendication 11 ou 12, comprenant en outre :
une étape consistant à rattacher des informations d'identification de l'objet cible aux données d'image d'objet cible et à stocker dans un moyen de stockage, lorsqu'il est déterminé que l'objet cible peut être identifié.

14. Procédé de tri d'articles selon l'une quelconque des revendications 11 à 13, dans lequel l'étape (S2) consistant à acquérir en tant que données d'image d'objet cible inclut une étape consistant à acquérir des premières données d'image acquises en imageant l'objet cible par un premier moyen d'imagerie, en tant que données d'image d'objet cible,
l'étape (S3) consistant à générer les données d'image de variation inclut une étape consistant à acquérir des secondes données d'image acquises en imageant l'objet cible par un second moyen d'imagerie, en tant que données d'image de variation, et
l'étape (S5) consistant à déterminer si oui ou non une identification est possible inclut une étape consistant à déterminer si oui ou non une identification est possible en comparant les données d'image d'objet cible avec les données d'image de variation.

15. Procédé de tri d'articles selon l'une quelconque des revendications 11 à 14, dans lequel l'étape (S5) consistant à déterminer si oui ou non une identification est possible inclut une étape consistant à comparer des données binaires d'image d'objet cible acquises en binarisant les données d'image d'objet cible avec des données binaires d'image de variation acquises en binarisant les données d'image de variation, et déterminer si oui ou non une identification est possible sur la base du résultat de comparaison.

16. Procédé de tri d'articles selon l'une quelconque des revendications 11 à 15, dans lequel l'étape (S5) consistant à déterminer si oui ou non une identification est possible inclut une étape consistant à extraire une zone où une zone de bloc d'objet cible extraite des données binaires d'image d'objet cible chevauche une zone de bloc d'image de variation extraite des données binaires d'image de variation, et déterminer si oui ou non une identification est possible sur la base d'une taille de la zone chevauchée.

17. Procédé de tri d'articles selon l'une quelconque des revendications 11 à 16, dans lequel l'étape (S3) consistant à générer des données d'image de variation inclut une étape consistant à générer les données d'image de variation sur la base d'une image dans laquelle une image avec un pli ou une image avec une saleté est rattachée aux données d'image d'objet cible.

18. Procédé de tri d'articles selon l'une quelconque des revendications 11 à 17, dans lequel l'étape (S3) consistant à générer des données d'image de variation inclut une étape consistant à générer les données d'image de variation sur la base d'une image inclinée dans laquelle l'inclinaison d'une image dans les données d'image d'objet cible est changée.

19. Procédé de tri d'articles selon l'une quelconque des revendications 11 à 18, dans lequel l'étape (S3) consistant à générer des données d'image de variation inclut une étape consistant à générer les données d'image de variation sur la base d'une image d'étirement et de rétrécissement dans laquelle une image dans les données d'image d'objet cible est rétrécie.

20. Procédé de tri d'articles selon l'une quelconque des revendications 11 à 19, dans lequel l'étape (S3) consistant à générer les données d'image de variation inclut une étape consistant à générer les données d'image de variation sur la base d'une image de gris dans laquelle l'intensité d'une image dans les données d'image d'objet cible est changée.

21. Produit de programme informatique comprenant un programme informatique adapté pour amener un ordinateur à exécuter le procédé de tri d'articles de l'une quelconque des revendications 11 à 20.
